# EUROPEAN PATENT APPLICATION

(11) **EP 4 775 800 A1**
(43) Date of publication of application: **15.07.2026**
(21) Application number: 26151118.2
(22) Date of filing: 09.01.2026
(51) Int. Cl.: F01D 5/02, F01D 21/00

(54) **GAS TURBINE ENGINE WITH SHAFT RETENTION SYSTEM AND METHOD OF INSPECTING USING THE SHAFT RETENTION SYSTEM**

(30) Priority: 09.01.2025 US 202519015210
(71) Applicant: Pratt & Whitney Canada Corp., (01BE5) Longueuil, QC J4G 1A1 (CA)
(72) Inventor: DUROCHER, Eric S., Boucherville (CA)
(74) Representative: Dehns

(57) **Abstract**

A gas turbine engine (20) is provided that includes an axial centerline (32), a compressor section (24), a combustor (26), a turbine section (28), and engine shaft, and a shaft retention system (54). The engine shaft is engaged with the compressor and turbine sections. The engine shaft has an aft end and axially extends along the engine axial centerline. The shaft retention system includes a shaft retainer cap (56) and a retainer piston (58). The shaft retainer cap is attached to the aft end of the engine shaft. The retainer piston is mounted for axial translation. The shaft retention system is disposable in an engaged configuration wherein the retainer piston is coupled with the shaft retainer cap, and in a disengaged configuration wherein the retainer piston is disengaged with the shaft retainer cap.

## Description

### TECHNICAL FIELD

The present disclosure relates to gas turbine engines in general, and to gas turbine engine shaft retention systems and methods for inspecting hot section components configurations in particular.

### BACKGROUND

The term "hot section removal" refers to the process of taking apart and removing the hottest components of a gas turbine engine, typically including the combustion chamber, turbine blades, and associated housing, for inspection, maintenance, or repair during a "hot section inspection" procedure, where the parts are carefully examined to determine if repair or replacement is necessary. In some instances it is possible to perform a hot section removal while the engine is still mounted on the aircraft. During the hot section removal, however, physical damage to engine components can occur. It would be very useful to have an engine configured to facilitate hot section removal in a manner that decreases the potential for engine component damage.

### SUMMARY

According to an aspect of the present disclosure, a gas turbine engine is provided. The gas turbine engine includes an axial centerline, a compressor section, a combustor, a turbine section, and engine shaft, and a shaft retention system. The engine shaft is engaged with the compressor and turbine sections. The engine shaft has an aft end and axially extends along the engine axial centerline. The shaft retention system includes a shaft retainer cap and a retainer piston. The shaft retainer cap is attached to the aft end of the engine shaft. The retainer piston is mounted for axial translation. The shaft retention system is disposable in an engaged configuration wherein the retainer piston is coupled with the shaft retainer cap, and in a disengaged configuration wherein the retainer piston is disengaged with the shaft retainer cap.

In any of the aspects or embodiments described above and herein, the retainer piston may be aligned with the shaft retainer cap and may be mounted for axial translation along the axial centerline of the engine.

In any of the aspects or embodiments described above and herein, the retainer piston may include a first mechanical feature and the shaft retainer cap may include a second mechanical feature and in the engaged configuration the first and second mechanical features are configured to maintain the retainer piston and the shaft retainer cap coupled with one another.

In any of the aspects or embodiments described above and herein, the shaft retention system may include a housing having a central bore, and the retainer piston may include a shaft, and the retainer piston may be mounted to the housing with the shaft extending through the central bore.

In any of the aspects or embodiments described above and herein, the axial translation of the retainer piston along the axial centerline in a first axial direction may be toward the shaft retainer cap and the axial translation of the retainer piston along the axial centerline in a second axial direction may be away from the shaft retainer cap.

In any of the aspects or embodiments described above and herein, the shaft retention system may include a piston spring disposed to bias the retainer piston away from the shaft retainer cap.

In any of the aspects or embodiments described above and herein, the piston spring may act between the shaft of the retainer piston and the housing, and axial translation of the retainer piston toward the shaft retainer cap may cause the piston spring to compress.

In any of the aspects or embodiments described above and herein, the retainer piston may be mounted to the housing with the shaft extending through the central bore in a manner that permits the axial translation and does not permit rotation of the shaft of the retainer piston about the axial centerline.

In any of the aspects or embodiments described above and herein, the housing may include at least one tool post extending axially outward from the PF aft surface.

In any of the aspects or embodiments described above and herein, the retainer piston may include a primary flange, a secondary flange, and a spring shaft.

In any of the aspects or embodiments described above and herein, the secondary flange may be disposed on a first axial side of the primary flange, and the spring shaft may be disposed on a second axial side of the primary flange, wherein the second axial side is opposite the first axial side.

In any of the aspects or embodiments described above and herein, the primary flange (PF) may include a PF forward surface and a PF aft surface, and the secondary flange (SF) may include an SF forward surface and an SF aft surface, and the PF forward surface and the SF aft surface are axially spaced apart from one another, thereby forming an annular channel therebetween.

In any of the aspects or embodiments described above and herein, the secondary flange may include an SF outer radial surface that extends between the SF forward surface and the SF aft surface, and the secondary flange may include at least one slot that extends between the SF forward surface and the SF aft surface, and radially inward from the SF outer radial surface.

In any of the aspects or embodiments described above and herein, the shaft retainer cap may include at least one lug configured to be received within the at least one slot, and in the engaged configuration, the at least one lug may be disposed in the annular channel, and the retainer piston may include at least one rotational limit feature that limits rotation of the shaft retainer cap relative to the retainer piston in the engaged configuration.

In any of the aspects or embodiments described above and herein, wherein the gas turbine engine may include a shaft nut attached to the engine shaft at the aft end of the engine shaft, and the shaft retainer cap may be attached to the shaft nut. The compressor section may include a low pressure compressor, and the turbine section may include a low pressure turbine, and the engine shaft may be a low pressure shaft engaged with the low pressure compressor and the low pressure turbine.

In any of the aspects or embodiments described above and herein, the gas turbine engine may be configured as a reverse-flow engine.

According to an aspect of the present disclosure, a method of inspecting a component within a gas turbine engine mounted on an aircraft is provided. The gas turbine engine has a compressor section, a combustor, a turbine section, and an engine shaft disposed along an axial centerline. The engine shaft is engaged with the compressor section and the turbine section, and has an aft end. The gas turbine engine is configured as a reverse-flow engine. The method includes: providing a shaft retention system that includes a shaft retainer cap and a retainer piston, wherein the shaft retainer cap is attached to the aft end of the engine shaft, and wherein the retainer piston is mounted for axial translation relative to a housing mounted as a static component within the gas turbine engine relative to the engine shaft; disposing the shaft retention system in an engaged configuration, including axially translating the retainer piston in a first axial direction toward the shaft retainer cap and coupling the retainer piston and the shaft retainer cap together; inspecting the component within the gas turbine engine; and disposing the shaft retention system in a disengaged configuration, including decoupling the retainer piston and the shaft retainer cap to permit axial translation of the retainer piston in a second axial direction away from the shaft retainer cap.

In any of the aspects or embodiments described above and herein, the housing may be configured to mount an actuating tool, and the step of disposing the shaft retention system in the engaged configuration may include using the actuating tool to axial translate the retainer piston in the first axial direction.

In any of the aspects or embodiments described above and herein, the step of coupling the retainer piston and the shaft retainer cap together may include rotating the engine shaft to align the shaft retainer cap relative to the retainer piston.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of a gas turbine engine that may utilize embodiments of the present disclosure.
FIG. 2 is a diagrammatic enlarged view of a portion of the engine at the aft end of a low pressure shaft of a gas turbine engine, illustrating an embodiment of the present disclosure shaft retention system disposed in a disengaged configuration.
FIG. 2A is a diagrammatic view illustrating the spring shaft received the central bore with a spline arrangement example.
FIG. 3 is a forward view of a shaft retainer cap embodiment.
FIG. 3A is a sectional view of the shaft retainer cap embodiment shown in FIG. 3 along the sectional line 3A-3A shown in FIG. 3.
FIG. 4 is an aft view of a retainer piston embodiment.
FIG. 4A is a sectional view of the retainer piston embodiment shown in FIG. 4 along the sectional line 4A-4A shown in FIG. 4.
FIG. 5 is a diagrammatic representation of a retainer piston coupled with a shaft retainer cap.
FIG. 5A is a sectional view of the diagrammatic representation of the retainer piston coupled with the shaft retainer cap shown in FIG. 5 along the sectional line 5A-5A shown in FIG. 5.
FIG. 6 is a diagrammatic enlarged view of a portion of the engine at the aft end of a low pressure shaft of a gas turbine engine, illustrating an embodiment of the present disclosure shaft retention system disposed in a disengaged configuration and including an actuating tool embodiment partially engaged.
FIG. 7 is the diagrammatic view shown in FIG. 6, now with the present disclosure shaft retention system disposed in an engaged configuration and the actuating tool embodiment fully engaged.
FIG. 8 is a diagrammatic enlarged view of a portion of the engine at the aft end of a low pressure shaft of a gas turbine engine, illustrating an embodiment of the present disclosure shaft retention system disposed in a disengaged configuration and including an actuating tool embodiment partially engaged.
FIG. 9 is the diagrammatic view shown in FIG. 8, now with the present disclosure shaft retention system disposed in an engaged configuration and the actuating tool embodiment fully engaged.

### DETAILED DESCRIPTION

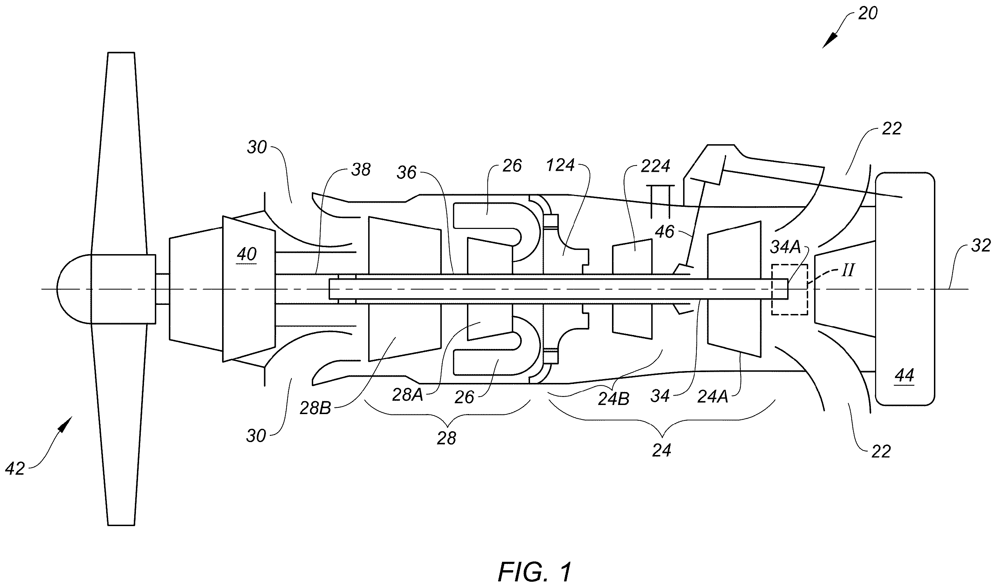

FIG. 1 diagrammatically illustrates a thermal engine in the form of a gas turbine engine 20 that includes an air inlet 22, a compressor section 24, a combustor 26, a turbine section 28, and an exhaust outlet 30 disposed on an axial centerline 32. The compressor section 24 includes a low pressure compressor (LPC 24A) and a high pressure compressor (HPC 24B). In the engine 20 embodiment shown in FIG. 1, the HPC 24B includes a centrifugal compressor stage 124 and an axial compressor stage 224. The turbine section 28 includes a high pressure turbine (HPT 28A) and a low pressure turbine (LPT 28B). A low pressure shaft 34 connects the LPT 28B to the LPC 24A. A high pressure shaft 36 connects the HPT 28A to the HPC 24B. An output driveshaft 38 is engaged with the low pressure shaft 34 and with a reduction gear box (RGB 40). FIG. 1 diagrammatically illustrates the engagement between the output shaft 38 and the low pressure shaft 34 in the form of a spline arrangement; e.g., the low pressure shaft 34 is diagrammatically shown received within the output driveshaft 38 with the spline arrangement therebetween. The present disclosure is not limited to this shaft arrangement; e.g., a geared arrangement may be utilized in addition to or in place of the spline arrangement to alter the relative rotational speeds of the low pressure shaft 34 and the output shaft 38. The present disclosure is not limited to a spline arrangement, a geared arrangement, or any particular engagement configuration between the low pressure shaft 34 and the output driveshaft 38. The RGB 40 is engaged with a propulsion unit 42; e.g., via a propeller shaft. In this example, the propulsion unit 42 includes a propeller. The present disclosure is not limited to use with propeller type propulsion units 42. In other embodiments, the propulsion unit 42 may include rotors (e.g., a helicopter or a tilt rotor aircraft), or the like. The RGB 40 permits the propulsion unit 42 to be driven at a rotational speed that is different (e.g., slower) than the rotational speed of the LPT 28B / LPC 24A.

The gas turbine engine 20 embodiment shown in FIG. 1 also includes an auxiliary gear box (AGB 44) that is driven off of the high pressure shaft 36 by a tower shaft 46 coupled with an AGB drive shaft. The present disclosure does not require a gas turbine engine 20 coupled with an AGB 44.

The gas turbine engine 20 example shown in FIG. 1 is a reverse-flow engine having the air inlet 22 disposed at the opposite of the engine 20 from the propulsion unit 42. In terms of axial positioning along the axial centerline 32, the engine components are disposed in the following order from the forward end of the engine to the aft end of the engine: the propulsion unit 42, the RGB 40, the exhaust outlet 30, the LPT 28B, the HPT 28A and combustor 26, the HPC 24B, the LPC 24A, the air inlet 22, and the AGB 44. The combustor 26 is disposed radially outside of the HPT 28A.

Air enters the engine 20 through the air inlet 22, passes through the LPC 24A and the HPC 24B, passes into the combustor 26 where it is mixed with fuel and combusted. Any non-combusted air and the gaseous combustion byproducts (collectively referred to as "core gas") are passed into the HPT 28A, and subsequently into the LPT 28B before exiting the engine 20 via the exhaust outlet 30. The core gas provides motive power to the HPT 28A and the LPT 28B. The HPT 28A drives the high pressure shaft 36 which in turn drives the HPC 24B; e.g., including the axial compressor stage 224 and the centrifugal compressor stage 124. The LPT 28B drives the low pressure shaft 34 which in turn drives the output drive shaft 38 and the propulsion unit 42. To facilitate the description herein, the terms "downstream" and "upstream" may be used to refer to engine component positioning relative to the direction of air / core gas passing through the engine 20. For example, the compressor section 24 is upstream of the combustor 26 and the turbine section 28 is downstream of the combustor 26. The present disclosure is not limited to the particular gas turbine engine 20 configuration diagrammatically shown in FIG. 1.

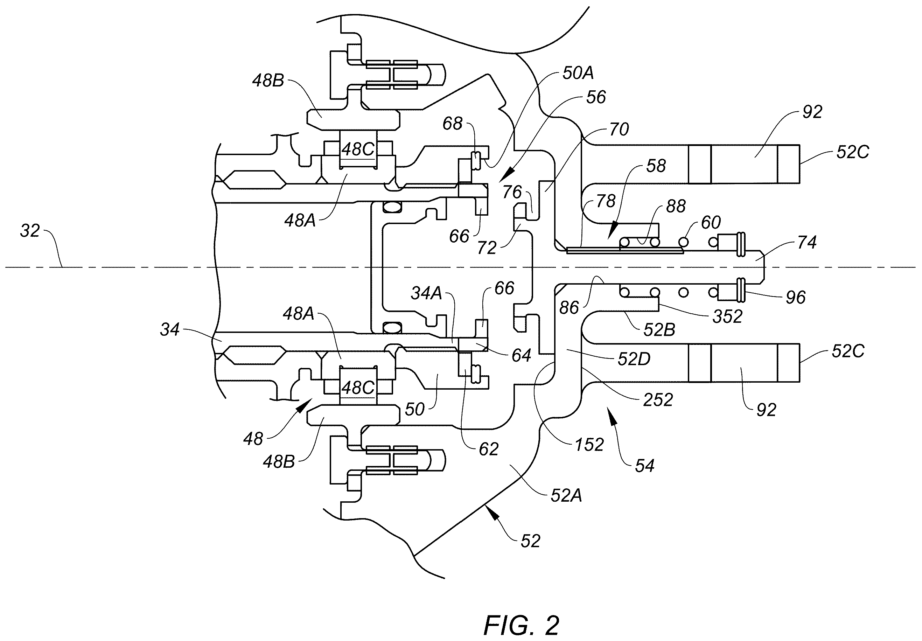

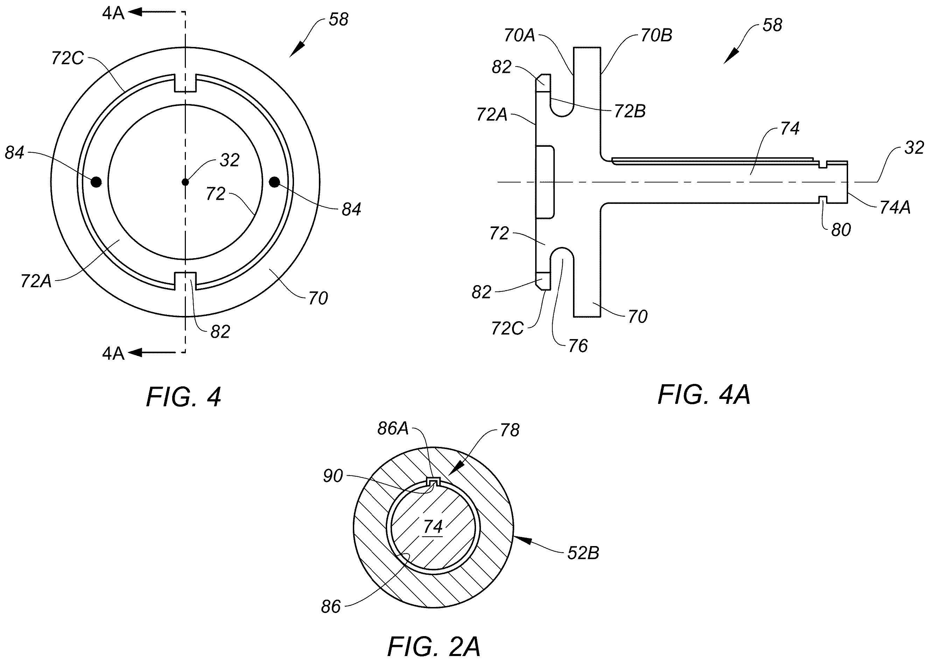

FIG. 2 is a diagrammatic enlarged view of a portion of the engine 20 at the aft end 34A of the low pressure shaft 34. FIG. 1 includes a dashed box (labeled "II") to indicate the location of the engine 20 portion diagrammatically illustrated in FIG. 2. As can be seen in FIG. 2, a bearing 48 may be disposed to rotationally support the low pressure shaft 34. The bearing 48 may include an inner race 48A, an outer race 48B, and roller elements 48C. The inner race 48A is engaged with the low pressure shaft 34 and the roller elements 48C are disposed between the inner and outer races 48A, 48B. The present disclosure is not limited to this particular bearing 48 arrangement. A shaft nut 50 is engaged with the aft end 34A of the low pressure shaft 34 and the inner race 48A of the bearing 48. A bearing housing 52 described hereinafter is coupled (e.g., via mechanical fasteners) with the outer race 48B of the bearing 48.

Aspects of the present disclosure include a shaft retention system 54 that may be used to retain the low pressure shaft 34 to facilitate inspection and/or repair of the engine 20, and/or engine 20 assembly, or the like. In an embodiment like that shown in FIG. 2, the shaft retention system 54 includes a shaft retainer cap 56, a retainer piston 58, and a bearing housing 52. In some embodiments, the shaft retention system 54 may include a piston spring 60. As will be detailed herein, present disclosure shaft retention system 54 embodiments employ the retainer piston 58 to mechanically engage with the shaft retainer cap 56 to retain the low pressure shaft 34 and prevent any appreciable axial travel of the low pressure shaft 34.

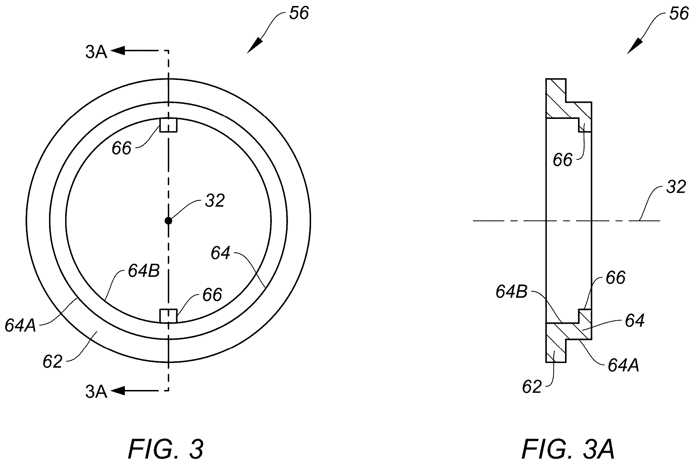

Referring to FIGS. 2, 3, and 3A, the shaft retainer cap 56 includes an outer radial flange 62, a central segment 64, and at least one lug 66. The outer radial flange 62 extends radially outward from an outer radial surface 64A of the central segment 64 and the at least one lug 66 extends radially inward from an inner radial surface 64B of the central segment 64. In the embodiment diagrammatically shown in FIGS. 2, 3, and 3A, the shaft retainer cap 56 includes a pair of lugs 66 disposed one hundred eighty degrees (180°) apart from one another. In some embodiments, the shaft retainer cap 56 may include more than two lugs 66. The present disclosure is not limited to the configuration of the shaft retainer cap 56 example shown in FIGS. 2 and 3A.

In the shaft retention system 54 diagrammatically shown in FIGS. 2, 3, and 3A, the shaft retainer cap 56 is configured to be retained with the shaft nut 50. FIG. 2 illustrates the outer radial flange 62 of the shaft retainer cap 56 disposed within a bore 50A disposed in the shaft nut 50. A retention ring 68 (e.g., a snap ring - see FIG. 2) may be used to maintain the outer radial flange 62 of the shaft retainer cap 56 within the shaft nut bore 50A. In some embodiments, the outer radial flange 62 and the shaft nut bore 50A may include mating mechanical features (e.g., a tab and slot, or an asymmetric shape, or the like - not shown) to prevent rotation of the shaft retainer cap 56 relative to the shaft nut 50.

The retainer piston 58 diagrammatically shown in FIGS. 4 and 4A includes a primary flange 70, a secondary flange 72, and a spring shaft 74. The primary flange 70 (PF) includes a PF forward surface 70A and a PF aft surface 70B. The secondary flange (SF) 72 includes a SF forward surface 72A, a SF aft surface 72B, and a SF outer radial surface 72C extending between the SF forward and SF aft surfaces 72A, 72B. The forward surface 70A of the primary flange 70 and the aft surface 72B of the secondary flange 72 are axially spaced apart from one another, thereby forming an annular channel 76 therebetween. The spring shaft 74 extends axially outward from the aft surface 70B of the primary flange 70 to a spring shaft distal end 74A. In some embodiments, at least a portion of the spring shaft 74 includes a portion of a spline arrangement 78 (e.g., see FIG. 2) for engagement with the bearing housing 52 as will be detailed herein. In some embodiments, the spring shaft 74 may include a retainer channel 80 disposed adjacent the distal end 74A of the spring shaft 74. The secondary flange 72 includes at least as many slots 82 as the number of shaft retainer cap lugs 66; e.g., if the shaft retainer cap 56 includes a single lug 66, the secondary flange includes one or more slots 82. The slot(s) 82 extend radially inward from the outer radial surface 72C of the secondary flange 72 and are configured to receive the lug(s) 66 of the shaft retainer cap 56. In some embodiments, the retainer piston 58 may include one or more rotational limit features 84 configured to limit rotational movement between the retainer piston 58 and the shaft retainer cap 56. A non-limiting example of a rotational limit feature is a pin, a tab, or the like that extends into the annular channel 76 between the primary flange 70 and the secondary flange 72. FIG. 4 illustrates a pair of rotational limit features 84 in the form of pins. The present disclosure is not limited to any particular rotational limit feature 84 configuration and does not require the inclusion of rotational features 84.

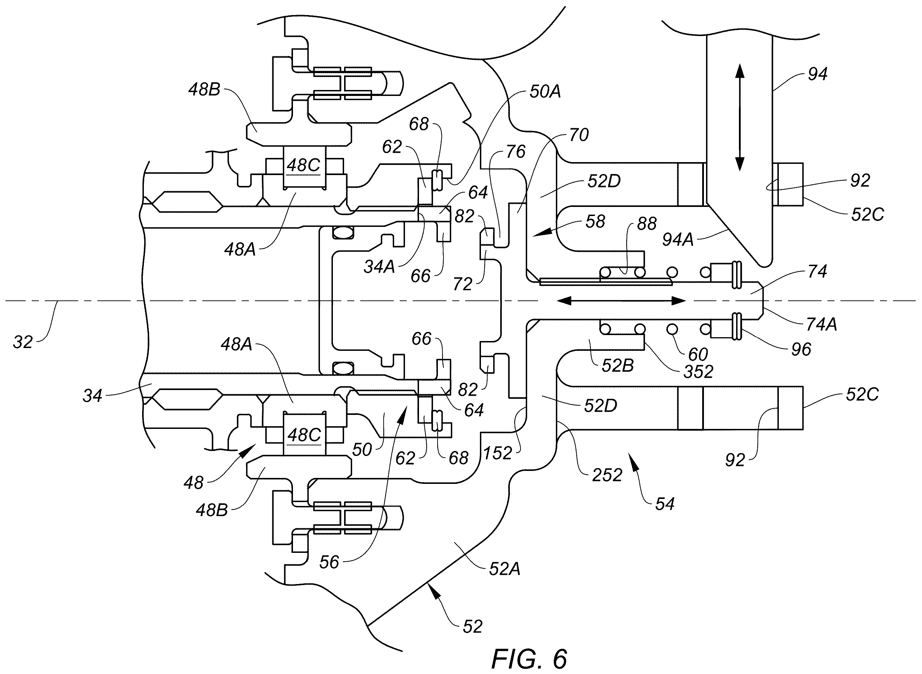

Referring to FIG. 2, the bearing housing 52 includes a bearing enclosure portion 52A, a piston shaft collar 52B, a pair of tool posts 52C, and is disposed about an axial centerline 32. The bearing enclosure portion 52A includes side walls that extend from a forward end to an end plate 52D, collectively forming an interior cavity. The end plate 52D has a forward axial surface 152 and an aft axial surface 252. The piston shaft collar 52B extends axially out from the aft axial surface 252 of the end plate 52D to a collar distal end surface 352. A central bore 86 extends through the piston shaft collar 52B and the end plate 52D. A spring seat bore 88 extends axially inward a distance from the collar distal end surface 352 and is concentric with the central bore 86. In some embodiments, the central bore 86 may include a portion of a spline arrangement 78 (see FIGS. 2 and 2A) for engagement with the spring shaft 74; e.g., the spline arrangement 78 may be a male / female arrangement. For example, the central bore 86 may include a slot 86A (see FIG. 2A) configured to receive a rib 90 attached to the spring shaft 74. The spline arrangement 78 is configured to allow axial movement of the retainer piston 58 relative to the bearing housing 52 and to prevent rotational movement of the retainer piston 58 /spring shaft 74 relative to the bearing housing 52. The present disclosure is not limited to any particular spline arrangement; e.g., bearing housing 52 / retainer piston 58 configurations that allow relative axial movement and prevent relative rotational movement may be used alternatively. The tool posts 52C extend axially outward from the aft axial surface 252 of the end plate 52D. The tool posts 52C are disposed on opposite sides of the axial centerline 32, spaced apart from the piston shaft collar 52B. Each tool post 52C includes a tool aperture 92 configured to receive an actuating tool 94 (see FIG. 6) configured to cause linear translation of the retainer piston 58. The bearing housing 52 configuration having a pair of tool posts 52C is an example of structure that may be included to facilitate actuation of the retainer piston 58 and the present disclosure is not limited thereto; e.g., a single tool post 52C may be included, or more than two tool posts 52C may be included, or a concentric body (not shown) may be utilized in place of the tool posts 52C, or the like.

Still referring to FIG. 2, the shaft retention system 54 is shown with the spring shaft 74 of the retainer piston 58 received within the central bore 86 of the bearing housing 52. As detailed herein, the engagement between the spring shaft 74 and the central bore 86 may be such that relative movement between the spring shaft 74 and the central bore 86 is limited to axial movement of the spring shaft 74 relative to the central bore 86. As shown in FIG. 2, the shaft retention system 54 includes a piston spring 60 acting between the spring seat bore 88 disposed in the piston shaft collar 52B and a mechanical retainer 96 attached to the spring shaft 74. In the example shown in FIG. 2, the mechanical retainer 96 is a washer and a retainer clip (e.g., a snap ring) that is engaged with the retainer channel 80 ( see FIG. 4A) disposed in the spring shaft 74. The present disclosure is not limited to the mechanical retainer 96 shown in FIG. 2; e.g., the mechanical retainer 96 may be a nut threaded onto the spring shaft 74, or a pin or clip extending through the spring shaft 74, or the like. The piston spring 60 acting between the spring seat bore 88 and the mechanical retainer 96 functions to bias the retainer piston 58 in a disengaged configuration. As will be detailed herein, the piston spring 60 may be compressed to permit the retainer piston 58 into an engaged configuration. The term "bias" is used to refer to the spring force (or "biasing force") produced by the piston spring 60 that acts between the spring seat bore 88 and the mechanical retainer 96. The piston spring 60 (e.g., a helical spring) has a spring rate that represents the amount of force needed to compress the piston spring 60 a predetermined distance. It is assumed, but not required, that the spring rate is linear. Hence, the biasing force produced by the piston spring 60 is a function of the amount that the piston spring 60 is compressed. In the disengaged configuration, the piston spring 60 may be compressed an amount that enables the piston spring 60 to hold the primary flange 70 of the retainer piston 58 in close proximity or in contact with a predetermined surface such as the forward axial surface 152 of the bearing housing end plate 52D. In this disengaged configuration, the retainer piston 58 is spaced apart from the shaft retainer cap 56 and will not engage with the shaft retainer cap 56 during operation of the gas turbine engine 20. To arrive at the engaged position, the retainer piston 58 is axially translated forward to a position wherein the retainer piston 58 can engage with the shaft retainer cap 56. The forward axial translation of the retainer piston 58 causes the piston spring 60 to compress. Hence, the piston spring 60 biases the retainer piston 58 in an aft axial direction and resists forward axial translation of the retainer piston 58.

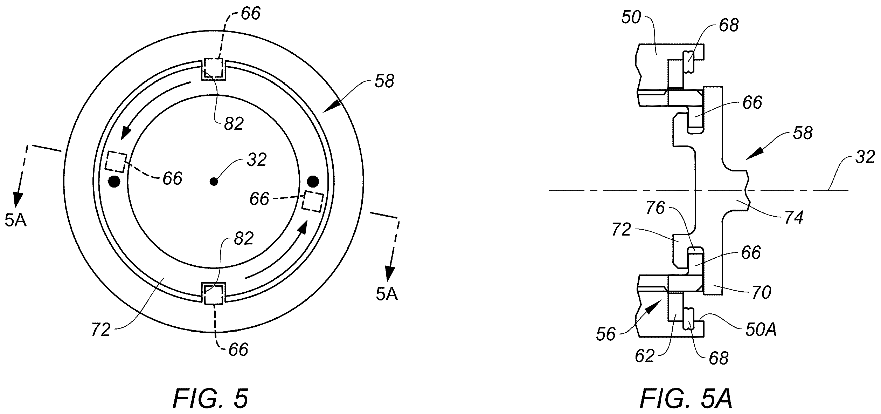

FIGS. 5 and 5A diagrammatically illustrate a pair of lugs 66 of a shaft retainer cap 56 disposed in corresponding slots 82 disposed in a secondary flange 72 of a retainer piston 58. FIG. 5 also diagrammatically illustrates the lugs 66 rotated counterclockwise. FIG. 5A diagrammatically illustrates the lugs 66 extending into the annular channel 76 of the retainer piston 58 disposed between the primary flange 70 and the secondary flange 72; e.g., in a configuration like that diagrammatically shown by the lugs 66 rotated counterclockwise in FIG. 5. In this configuration (i.e., an engaged configuration), the shaft retainer cap 56 and the retainer piston 58 are coupled.

FIG. 6 illustrates a shaft retention system 54 embodiment like that diagrammatically shown in FIG. 2, wherein the shaft retention system 54 is disposed in a disengaged configuration. In the disengaged configuration, the piston spring 60 biases the retainer piston 58 in an aft direction maintaining the retainer piston 58 out of engagement with the shaft retainer cap 56.

During an inspection, maintenance, or repair procedure wherein a technician desired to remove the sections of the engine 20 (e.g., a "hot section removal"), the gas turbine engine 20 is not under power and the low pressure shaft 34 is stationary. As will be detailed herein, the low pressure shaft 34 may be manually rotated, but is not rotated as a result of engine power.

According to aspects of the present disclosure, the shaft retention system 54 may be used to axially secure the low pressure shaft 34, and thereby facilitate the desired inspection, maintenance, or repair procedure.

FIG. 6 diagrammatically illustrates an actuating tool 94 extending into the tool aperture 92 of a first tool post 52C of the bearing housing 52. As shown in FIG. 6, the actuating tool 94 is not engaged with the retainer piston 58, and therefore has not caused axial translation of the retainer piston 58 and/or compression of the piston spring 60.

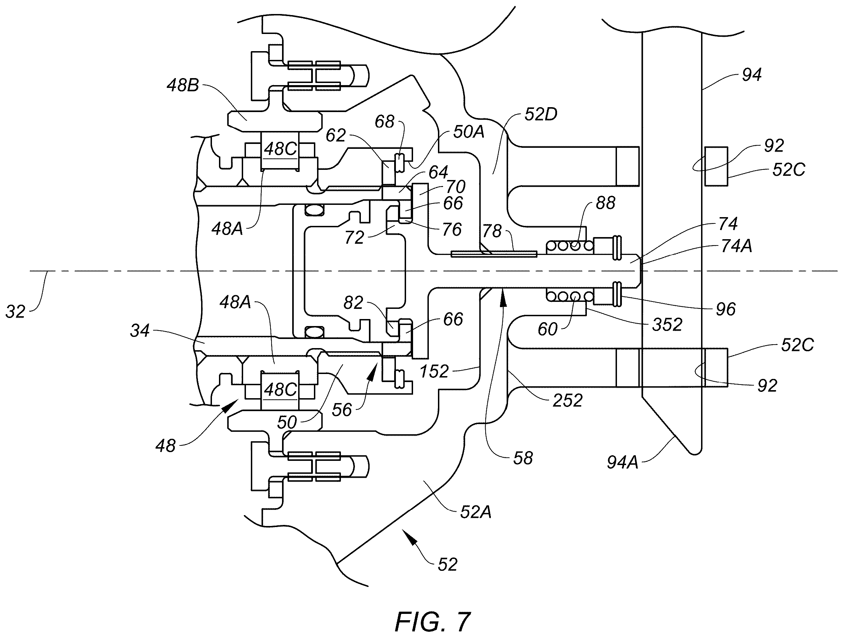

Insertion of the actuating tool 94 in a direction perpendicular to the axial centerline 32 of the shaft retention system 54 causes the actuating tool 94 to engage the distal end 74A of the spring shaft 74 of the retainer piston 58. The actuating tool 94 shown in FIG. 6 has an angularly disposed cam surface 94A that linearly increases the axial translation of the retainer piston 58. Continued insertion will cause the slot(s) 82 disposed in the secondary flange 72 of the retainer piston 58 to be in a position to receive the lug(s) 66 of the shaft retainer cap 56. The spline arrangement 78 between the central bore 86 of the bearing housing 52 and the spring shaft 74 of the retainer piston 58 allows the retainer piston 58 to translate axially without rotation. The low pressure shaft 34 of the engine 20 can be rotated to align the slot(s) 82 disposed in the secondary flange 72 of the retainer piston 58 with the lug(s) 66 of the shaft retainer cap 56. Once the slot(s) 82 and lug(s) 66 are aligned, the shaft retention system 54 embodiment is disposed in the engaged configuration and the actuating tool 94 can be fully inserted between the tool posts 52C; e.g., see FIG. 7. Subsequently, the low pressure shaft 34 can be rotated so that the lug(s) 66 is disposed within the annular channel 76 disposed between the primary flange 70 and the secondary flange 72 of the shaft retainer cap 56. **In** those embodiments that include rotational limit features 84, the features 84 will limit the rotation of the low pressure shaft 34 relative to the retainer piston 58 and provide an indication that the low pressure shaft 34 is retained. Once the low pressure shaft 34 is retained, the inspection, maintenance, or repair procedure can be initiated. Once the inspection, maintenance, or repair procedure is completed, the low pressure shaft 34 can be rotated until the lug(s) 66 is once again aligned with the slot 82. As the actuating tool 94 is removed, the piston spring 60 will bias the retainer piston 58 towards the disengaged position. When the actuating tool 94 is completely removed, the retainer piston 58 will be maintained in the disengaged position by the piston spring 60.

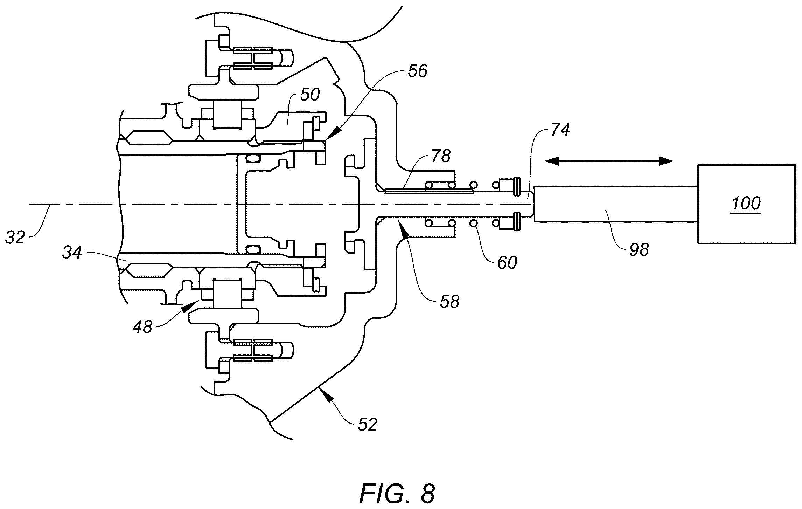

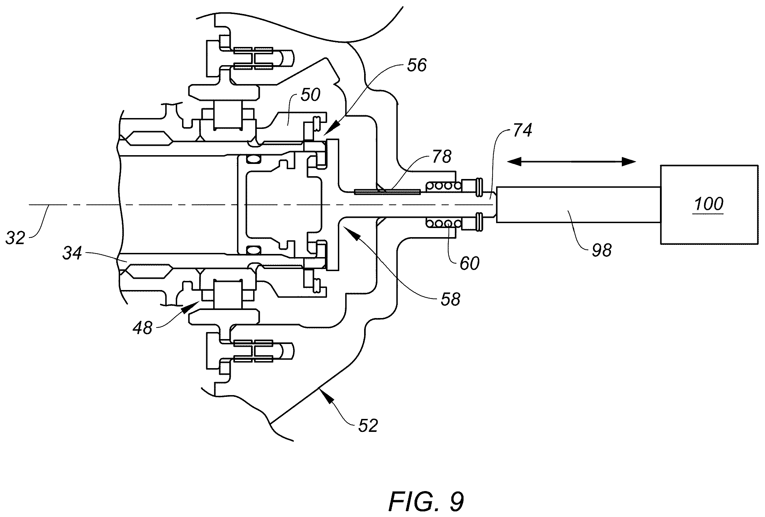

The shaft retention system 54 embodiment shown in FIGS. 6 and 7 is provided as an example and the present disclosure is not limited thereto. FIGS. 8 and 9 illustrate another non-limiting example that utilizes the same retainer piston 58, shaft retainer cap 56, and piston spring 60 arrangement shown in FIGS. 6 and 7. **In** this embodiment, the bearing housing 52 does not include a tool post 52C and does not utilize an actuating tool 94 like that diagrammatically shown in FIGS. 6 and 7. **In** place thereof, this embodiment utilizes a pushrod 98 and an actuator 100. The pushrod 98 is axially aligned and in contact with the retainer piston 58. The actuator 100 is configured to axially translate the pushrod 98 to actuate the shaft retention system 54 from the disengaged configuration to the engaged configuration.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted is a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. **In** alternative embodiments, such elements may be configured as combined elements. **It** is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A gas turbine engine having an axial centerline, comprising:
a compressor section;
a combustor;
a turbine section;
an engine shaft engaged with the compressor section and the turbine section, the engine shaft having an aft end, wherein the engine shaft axially extends along the axial centerline of the engine; and
a shaft retention system that includes:
a shaft retainer cap attached to the aft end of the engine shaft;
a retainer piston mounted for axial translation;
wherein the shaft retention system is disposable in an engaged configuration wherein the retainer piston is coupled with the shaft retainer cap, and in a disengaged configuration wherein the retainer piston is disengaged with the shaft retainer cap.

2. The gas turbine engine of claim 1, wherein the retainer piston is aligned with the shaft retainer cap and is mounted for axial translation along the axial centerline of the engine.

3. The gas turbine engine of claim 1 or 2, wherein the retainer piston includes a first mechanical feature and the shaft retainer cap includes a second mechanical feature and in the engaged configuration the first mechanical feature and the second mechanical feature are configured to maintain the retainer piston and the shaft retainer cap coupled with one another.

4. The gas turbine engine of claim 1, 2 or 3, wherein the shaft retention system further includes a housing having a central bore; and
wherein the retainer piston includes a shaft; and
wherein the retainer piston is mounted to the housing with the shaft extending through the central bore.

5. The gas turbine engine of claim 4, wherein the axial translation of the retainer piston along the axial centerline in a first axial direction is toward the shaft retainer cap and the axial translation of the retainer piston along the axial centerline in a second axial direction is away from the shaft retainer cap, and/or
wherein the retainer piston is mounted to the housing with the shaft extending through the central bore in a manner that permits the axial translation and does not permit rotation of the shaft of the retainer piston about the axial centerline.

6. The gas turbine engine of any preceding claim, wherein the shaft retention system further includes a piston spring disposed to bias the retainer piston away from the shaft retainer cap,
optionally wherein the piston spring acts between the shaft of the retainer piston and the housing, and axial translation of the retainer piston toward the shaft retainer cap causes the piston spring to compress.

7. The gas turbine engine of any preceding claim, wherein the retainer piston includes a primary flange, a secondary flange, and a spring shaft.

8. The gas turbine engine of claim 7, wherein the secondary flange is disposed on a first axial side of the primary flange, and the spring shaft is disposed on a second axial side of the primary flange, wherein the second axial side is opposite the first axial side.

9. The gas turbine engine of claim 8, wherein the primary flange (PF) includes a PF forward surface and a PF aft surface, and the secondary flange (SF) includes an SF forward surface and an SF aft surface, and the PF forward surface and the SF aft surface are axially spaced apart from one another, thereby forming an annular channel therebetween.

10. The gas turbine engine of claim 9, wherein the secondary flange includes an SF outer radial surface that extends between the SF forward surface and the SF aft surface; and
wherein the secondary flange includes at least one slot that extends between the SF forward surface and the SF aft surface, and radially inward from the SF outer radial surface.

11. The gas turbine engine of claim 10, wherein the shaft retainer cap includes at least one lug configured to be received within the at least one slot; and
wherein in the engaged configuration, the at least one lug is disposed in the annular channel; and
wherein the retainer piston includes at least one rotational limit feature that limits rotation of the shaft retainer cap relative to the retainer piston in the engaged configuration.

12. The gas turbine engine of any preceding claim, further comprising a shaft nut attached to the engine shaft at the aft end of the engine shaft; and
wherein the shaft retainer cap is attached to the shaft nut; and
wherein the compressor section includes a low pressure compressor, and the turbine section includes a low pressure turbine, and the engine shaft is a low pressure shaft engaged with the low pressure compressor and the low pressure turbine.

13. The gas turbine engine of any preceding claim, wherein the gas turbine engine is configured as a reverse-flow engine, and/or
wherein the housing includes at least one tool post extending axially outward from the PF aft surface.

14. A method of inspecting a component within a gas turbine engine mounted on an aircraft, the gas turbine engine having a compressor section, a combustor, a turbine section, and an engine shaft disposed along an axial centerline, and wherein the engine shaft is engaged with the compressor section and the turbine section, and has an aft end, and wherein the gas turbine engine is configured as a reverse-flow engine, the method comprising:
providing a shaft retention system that includes a shaft retainer cap and a retainer piston, wherein the shaft retainer cap is attached to the aft end of the engine shaft, and wherein the retainer piston is mounted for axial translation relative to a housing mounted as a static component within the gas turbine engine relative to the engine shaft;
disposing the shaft retention system in an engaged configuration, including axially translating the retainer piston in a first axial direction toward the shaft retainer cap and coupling the retainer piston and the shaft retainer cap together;
inspecting the component within the gas turbine engine; and
disposing the shaft retention system in a disengaged configuration, including decoupling the retainer piston and the shaft retainer cap to permit axial translation of the retainer piston in a second axial direction away from the shaft retainer cap.

15. The method of claim 14, wherein the shaft retention system further includes a piston spring disposed to bias the retainer piston in the second axial direction, and axial translation of the retainer piston in the first axial direction causes the piston spring to compress, and/or
wherein the housing is configured to mount an actuating tool, and wherein the step of disposing the shaft retention system in the engaged configuration, includes using the actuating tool to axial translate the retainer piston in the first axial direction, and/or
wherein the step of coupling the retainer piston and the shaft retainer cap together includes rotating the engine shaft to align the shaft retainer cap relative to the retainer piston.
